# EUROPÄISCHE PATENTANMELDUNG

(11) **EP 0 653 798 A1**
(43) Veröffentlichungstag der Anmeldung: **17.05.1995**
(21) Anmeldenummer: 94203149.3
(22) Anmeldetag: 28.10.1994
(51) Int. Cl.: H01M 10/46, H01M 10/44

(54) **Batterie mit einem an der Batterie angeschlossenen Spannungsumsetzer**

(30) Priorität: 05.11.1993 DE 4337786
(71) Anmelder: Philips Patentverwaltung GmbH, 22335 Hamburg (DE); Philips Electronics N.V., 5621 BA Eindhoven (NL)
(72) Erfinder: Köhler, Bruno, Dipl.-Ing., c/o Philips, D-20097 Hamburg (DE)
(74) Vertreter: Walz, Erich

(57) **Zusammenfassung**

Bekannt sind Batterien, bei denen ein Spannungsumsetzer angeschlossen ist, um bei sinkender Batteriespannung eine konstante Ausgangsspannung aufrechtzuerhalten.

Um eine möglichst einfache Handhabung von Batterie und Spannungsumsetzer zur erreichen, schlägt die Erfindung vor, Batterie und Spannungsumsetzer in einer mechanischen Einheit zu vereinigen.

## Beschreibung

Die Erfindung betrifft eine Batterie mit einem an der Batterie angeschlossenen Spannungsumsetzer zur Erzeugung einer konstanten Ausgangsspannung.

Batterien, insbesondere wiederaufladbare Lithium-Ionen und Lithium-Polymer Batterien weisen den Nachteil auf, daß bei Entladung der Batterie die von der Batterie gelieferte Spannung sinkt. Dies hat zur Folge, daß solche Batterien trotz ihrer hohen Energiedichte für elektronische Geräte häufig nicht anwendbar sind, weil diese eine konstante Betriebsspannung benötigen. Zur Erzeugung einer konstanten Ausgangsspannung ist aus DE 36 08 082 C2 eine Schaltungsanordnung mit einer Tiefsetz-Hochsetzstellerkombination bekannt, bei der umschaltbar entweder der Tiefsetzsteller oder der Hochsetzsteller betrieben wird. Ist die Eingangsspannung dieser Tiefsetz-Hochsetzstellerkombination, die beispielsweise von einer geladenen Batterie geliefert wird, größer als die vorgesehene Ausgangsspannung, so wird der Tiefsetzsteller zur Herabsetzung der Eingangsstellung verwendet. Sinkt die Eingangsspannung durch langsame Entladung der Batterie, so reicht irgendwann die Betriebsart des Tiefsetzens nicht mehr aus, um die Ausgangsspannung konstant zu halten. In diesem Fall wird auf Hochsetzbetrieb umgeschaltet.

Solche Spannungsumsetzer sind meist als Schaltregler ausgeführt, um durch die Spannungsumsetzung möglichst wenig Energieeinbußen hinnehmen zu müssen. Solche Schaltregler erzeugen jedoch eine Störstrahlung, die besonders bei elektrischen Geräten mit gedrängter Bauweise, wie beispielsweise tragbaren Mobilfunkgeräten zu unerwünschten oder unzulässigen Störungen fuhren können. Je nach gewünschter Ausgangsspannung und Anzahl der vorgesehenen Batteriezellen, ist eine entsprechende Dimensionierung des Spannungsumsetzers vorzunehmen.

Aufgabe der Erfindung ist es, eine möglichst einfache Batterieeinheit zu schaffen, die eine konstante Spannung aufweist.

Diese Aufgabe wird bei einer Batterie und einem Spannungsumsetzer der eingangs genannten Art dadurch gelöst, daß Batterie und Spannungsumsetzer eine mechanische Einheit bilden. Durch die mechanische Einheit von Batterie und Spannungsumsetzer können diese zu einem Funktionsblock in beliebigen Normgehäusen vereint werden. Höhere Ausgangsspannungen bzw. höhere Ausgangsströme sind in einfacher Weise dadurch zu erhalten, in dem die Batterie-Spannungsumsetzer-Einheiten wahlweise in Reihe oder parallel geschaltet werden.

Besonders bei wiederaufladbaren Batterien ist es vorteilhaft, wenn die mechanische Einheit von Batterie und Spannungsumsetzer zusätzlich eine Ladeschaltung zur Aufladung der Batterie umfaßt.

Durch Unterbringung von Batterie und Spannungsumsetzer und gegebenenfalls einer Ladeschaltung in einem gemeinsamen Gehäuse, bei dem am Gehäuse elektrisch leitende Kontakte angebracht sind, an welchen die Ausgangsspannung des Spannungsumsetzers nach außen geführt sind, kann der mechanischen Einheit von Batterie und Spannungsumsetzer die Form und Abmessung einer Standard-Batterie gegeben werden. Im Gebrauch unterscheidet sich diese Batterie mit integriertem Spannungsumsetzer nicht von anderen Batterien. Durch die Integration des Spannungsumsetzers in ein Batteriegehäuse der Spannungsumsetzer elektromagnetisch abgeschirmt. Gegenüber einer Anordnung des Spannungsumsetzers auf der Leiterplatte eines zu versorgenden elektrischen Gerätes, sind somit keine zusätzlichen Abschirmungsmaßnahmen erforderlich. Der entscheidende Vorteil jedoch ist, daß der Akku mit integriertem Spannungsumsetzer wie gewöhnliche Akkumulatoren bzw. Batterien ausgetauscht werden kann.

Die Akkumulatorzelle mit integriertem Spannungsumsetzer hat desweiteren den Vorteil, daß als Akkumulator auch Zellen mit großer Spannungsdifferenz zwischen der Ausgangsspannung im vollaufgeladenen Zustand und im entladenen Zustand, wie beispielsweise Lithium-Zellen verwendet werden können. Solche Zellen weisen meist ein besseres Kapazität/Volumen-Verhältnis auf als herkömmliche Zellen wie z.B. Nickel-Cadmium-Akkumulatoren. Durch Integration einer solchen Zelle und eines Spannungsumsetzers erhält man eine wiederaufladbare Zelle, die bei gleichem Volumen eine höhere Stromkapazität aufweist und dennoch eine konstante Ausgangsspannung liefert. Bei Verwendung von gleicher Gehäusegröße sind sogar ältere Geräte ohne Probleme mit den erfindungsgemäßen Akkuzellen problemlos nachrüstbar.

Die Erfindung wird nun anhand eines in den Figuren dargestellten Ausführungsbeispiels näher beschrieben und erläutert. Es zeigen:
- Fig. 1: Mechanischer Aufbau einer Akkuzellen mit integriertem Spannungsumsetzer,
- Fig. 2: eine schematische Darstellung der Zusammenschaltung von Akkuzelle, Spannungsumsetzer und Ladeschaltung,
- Fig. 3: Entladekurve einer Lithiumzelle mit Arbeitsbereichen des Spannungsumsetzers.

Das im Ausführungsbeispiel gewählte Gehäuse 1 für die Akkuzelle mit integriertem Spannungsumsetzer entspricht in seiner äußeren Form einer Standard-Akkuzelle mit einem positiven Pol 2 und einem negativen Pol 3 auf der Unterseite des Gehäuses 1. Ein Teil des Gehäuses 1 wird ausgefüllt von einer Lithumzelle 4, während im restlichen Teil die Elektronik des Spannungsumsetzers 5 und einer Ladeschaltung 6 untergebracht sind.

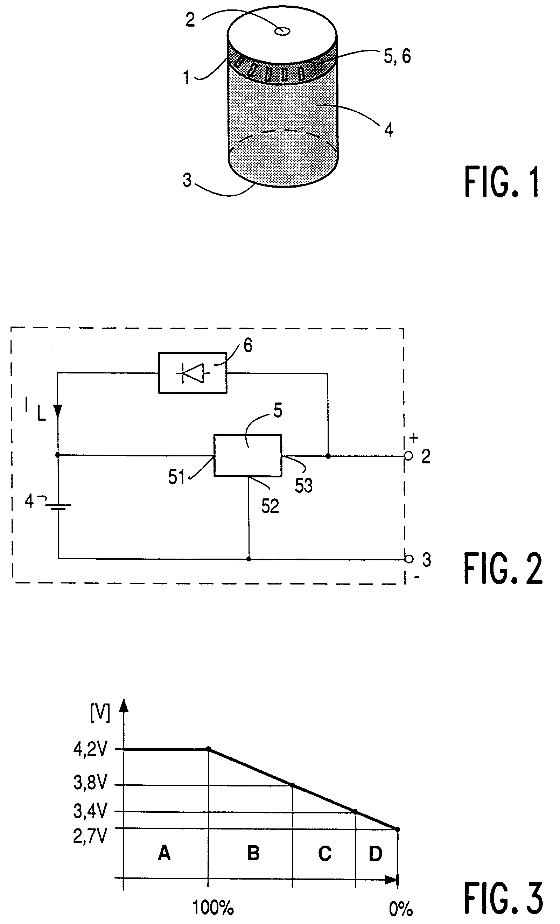

In Fig. 2 werden für die gleichen Bauteile die gleichen Bezugszeichen wie in Fig. 1 verwendet. An der integrierten Lithiumzelle 4 ist mit seinem Eingang 51 der Spannungsumsetzer 5 angeschlossen, dessen Ausgangsspannung von seinem Ausgang 53 an den positiven Pol 2 der integrierten Akkuzelle geführt ist. Der negative Anschluß der Lithiumzelle 4 ist an den negativen Pol 3 der integrierten Akkuzelle geführt. Der Anschluß für die negative Betriebsspannung 52 des Spannungsumsetzers 5 ist ebenfalls mit dem negativen Pol der Lithiumzelle 4 verbunden. Am positiven Pol 2 der integrierten Akkuzelle ist eine Ladeschaltung 6 angeschlossen, welche bei entsprechend anliegender Ladespannung einen Ladestrom I_{L} direkt zum positiven Pol der Lithiumzelle 4 führt.

Fig. 3 zeigt die Entladespannungskurve in einer Lithiumzelle. Im Ladezustand von 100 Prozent beträgt die Spannung an den Anschlüssen einer Lithiumbatterie 4,2 V. Der Spannungsumsetzer 5 ist beispielsweise so ausgestaltet, daß er bei einer Eingangsspannung zwischen 3,8 V und 4,2 V die Spannung auf ca. 3,6 V herabsetzt (Bereich B in Fig. 3). In einem Bereich zwischen 3,8 V. und 3,4 Volt (Bereich C von Fig. 3) wird die von der Lithiumzelle 4 abgegebene Spannung ohne Spannungsumsetzung direkt zum positiven Anschlußpol 2 durchgeschaltet. Sinkt bei weitergehender Entladung die Klemmenspannung der Lithiumbatterie 4 schließlich unter 3,4 V (Bereich D der Fig. 3) so schaltet der Spannungsumsetzer 5 in eine Aufwärtstransformation um und erzeugt eine Ausgangsspannung von ca. 3,6 V. Auf diese Weise erhält man an den Ausgangspolen der integrierten Akkuzelle unabhängig vom Ladezustand eine Ausgangsspannung von ca. 3,6 V.

Im allgemeinen wird man die Ausgangsspannung so wählen, daß sie 1,2 V oder ein ganzzahligens Vielfaches davon beträgt, um eine Kompatibilität zu Standard-Batterien mit 1,2 V Spannung zu schaffen.

Je nach dem welcher schaltungstechnische Aufwand betrieben wird, kann auch auf eine direkte Durchschaltung der Ausgangsspannung der Lithiumzelle 4 verzichtet werden. Der Spannungsumsetzer entspricht dann einer Tiefsetz-Hochsetz-Stellerkombination wie sie in der DE 36 08 082 C2 beschrieben ist. Da jedoch die Ausgangsspannung bei der Entladung von bisher üblichen Batterien bzw. Akkumulatoren wie z.B. Nickel-Kadmium-Akkumulatoren mit dem Ladezustand variieren und die zu versorgenden elektronischen Geräte auf solche Spannungsschwankungen hin ausgelegt sind, brauchen an die Spannungskonstanz des Spannungsumsetzers 5 keine großen Anforderungen gestellt werden. Spannungsschwankungen von ca. 10 Prozent sind meist tolerierbar.

Je nach Anwendungszweck ist es dem Belieben des Fachmanns überlassen, ob er den Spannungsumsetzer gar nur als Tiefsetzsteller oder nur als Hochsetzsteller auslegt.

Zum Laden der Lithiumzelle 4 ist die Ladeschaltung 6 vorgesehen. Hierzu wird eine höhere Spannung an die Pole der integrierten Akkuzelle angelegt. Durch die höhere Spannung wird die Ladeschaltung 6 auf Durchlaß geschaltet und der Ladestrom I_{L} fließt zur Akkuzelle 4. Im einfachsten Fall besteht die Ladeschaltung 6 aus einer im Ladebetrieb in Durchlaßrichtung betriebenen Diode. Während des Ladebetriebs (Bereich A der Fig. 3) ist der Spannungsumsetzer 5 vorzugsweise in Sperrbetrieb geschaltet, so daß der vom positiven Pol 2 fließende Ladestrom nicht über den Ausgang 53 des Spannungsumsetzers 5 in den Spannungsumsetzer 5 hineinfließen kann.

## Patentansprüche

1. Batterie mit einem an der Batterie angeschlossen Spannungsumsetzer zur Erzeugung einer konstanten Ausgangsspannung,
dadurch gekennzeichnet,
daß Batterie und Spannungsumsetzer eine mechanische Einheit bilden.

2. Batterie nach Anspruch 1,
dadurch gekennzeichnet,
daß die Batterie eine wiederaufladbare Batterie ist und die mechanische Einheit eine Ladeschaltung (6) zur Aufladung der Batterie (4) umfaßt.

3. Batterie nach Anspruch 1 oder 2,
dadurch gekennzeichnet,
daß Batterie (4) und Spannungsumsetzer (5) und gegebenenfalls die Ladeschaltung (6) in einem gemeinsamen Gehäuse (1) untergebracht sind, wobei an diesem Gehäuse elektrisch leitende Kontakte (2, 3) angebracht sind, an welchen die Ausgangsspannung des Spannungsumsetzers (5) nach außen geführt sind.

4. Batterie nach Anspruch 1, 2 oder 3,
dadurch gekennzeichnet,
daß der Spannungsumsetzer (5) eine Tiefsetz-Hochsetz-Stellerkombination ist.

5. Batterie nach Anspruch 1, 2, 3, oder 4,
dadurch gekennzeichnet,
daß die Ausgangsspannung ein ganzzahliges Vielfaches von 1,2 V beträgt.
